# EUROPEAN PATENT APPLICATION

(11) **EP 4 331 377 A1**
(43) Date of publication of application: **06.03.2024**
(21) Application number: 22795881.6
(22) Date of filing: 28.04.2022
(51) Int. Cl.: A23L 7/10, A23L 5/10, A23L 7/157

(54) **METHOD FOR PRODUCING MODIFIED WHEAT FLOUR, BATTER MATERIAL FOR BATTERED AND FRIED FOOD AND METHOD FOR PRODUCING BATTERED AND FRIED FOOD**

(30) Priority: 28.04.2021 JP 2021076843
(71) Applicant: Nisshin Seifun Welna Inc., Tokyo 101-8441 (JP)
(72) Inventor: YAMAZAKI, Shuhei, Tokyo 103-8544 (JP); KAWASAKI, Hidetoshi, Tokyo 103-8544 (JP)
(74) Representative: Forstmeyer, Dietmar
(86) International application number: PCT/JP2022/019249
(87) International publication number: WO 2022/230968

(57) **Abstract**

A method for producing a modified wheat flour of the present invention includes a first heating step of heating a raw material wheat flour under hermetically sealed conditions so that the temperature of the raw material wheat flour exceeds 100°C and a second heating step of heating the raw material wheat flour from the first heating step under atmospheric pressure conditions so that the temperature of the raw material wheat flour is in a range of 90°C to 120°C. Preferably, the method includes a step of adjusting the moisture content of the raw material wheat flour to 12 to 22 mass% prior to the first heating step. According to the present invention, it is possible to produce fried coated food in which a coating has excellent adhesion to a solid ingredient and also has an excellent texture.

## Description

### Technical Field

The present invention relates to a modified wheat flour suitable for a coating material for fried coated food.

### Background Art

Wheat flour is used as ingredient flour of bread, noodle doughs, coating materials for fried coated food, and the like, or a food material such as a base material for sauces, and is also used as flour for preventing doughs from sticking to workers' hands or tools during the production of bread or noodle doughs. Wheat flour does not necessarily have good workability as an ingredient of food because, when wheat flour is mixed with water, due to the properties of wheat flour, the mixture tends to be uneven and lumpy or tends to be sticky. In the case of fried coated food made by cooking a solid ingredient coated with a coating material, such properties of wheat flour are used to attach wheat flour to the solid ingredient as the coating material, but on the other hand, when wheat flour is heated, the protein contained in wheat flour becomes hard, thus causing the coating material of the fried coated food to crumble, which can result in a lack of unity between the taste of the solid ingredient and the taste of the coating material.

In view of these problems with wheat flour, research has been conducted to improve wheat flour, and various modified wheat flours have been proposed. Patent Literature 1 discloses that a granulated wheat flour having good workability with less formation of lumps of flour and less scattering of flour is obtained by granulating a raw material powder containing wheat flour with water under non-heated conditions, specifically, under temperature conditions that do not increase the degree of gelatinization of the raw material powder by 5% or more during the granulation process. Patent Literature 2 discloses that a wheat flour that exhibits a non-cohesive and smooth texture when dispersed in water and heated can be obtained by dehydrating a wheat flour and then heat treating the dehydrated wheat flour at 100°C or higher. Patent Literature 3 discloses that a modified wheat flour that is obtained by subjecting a raw material wheat flour to a wet heat treatment or a dry heat treatment and that has an RVA peak viscosity and a gelatinization onset temperature within respective specific ranges is suitable for a coating of fried coated food because it has good workability with good dispersibility in water. Patent Literature 4 discloses, as a wheat flour for fried coated food, a modified wheat flour that is obtained through a wet heat treatment followed by drying and milling and that has a specific particle size, a specific degree of gelatinization, and a specific viscosity, and also discloses, as conditions for the wet heat treatment, conditions in which wheat flour is heated at 110°C to 130°C for 10 to 20 minutes under 1 atm.

### Citation List

### Patent Literature

Patent Literature 1: JP 2014-200208A
Patent Literature 2: US 5720822A
Patent Literature 3: US 2019014801A1
Patent Literature 4: JP 2008-67675A

### Summary of Invention

Conventionally proposed modified wheat flours have room for improvement in terms of adhesion of a coating to a solid ingredient in fried coated food, for example. In order to compensate for the insufficient adhesion of the coating, a method has been proposed in which a thickening agent and the like are added to a wheat flour, but there are cases where this method degrades the texture of the coating of fried coated food. A technology that can achieve both a high level of adhesion and an excellent texture, of the coating has not yet been provided.

It is an object of the present invention to provide a technology that can improve the adhesion of a coating of fried coated food and the texture of the coating.

The present invention provides a method for producing a modified wheat flour, the method including: a first heating step of heating a raw material wheat flour under hermetically sealed conditions so that the temperature of the raw material wheat flour exceeds 100°C; and a second heating step of heating the raw material wheat flour from the first heating step under atmospheric pressure conditions so that the temperature of the raw material wheat flour is in a range of 90°C to 120°C.

The present invention also provides a coating material for fried coated food, the coating material containing a modified wheat flour produced using the production method of the present invention described above.

The present invention also provides a method for producing fried coated food, the method including a step of attaching a coating material containing a modified wheat flour produced using the production method of the present invention described above to a solid ingredient and then cooking the solid ingredient.

### Description of Embodiments

In a method for producing a modified wheat flour of the present invention, a raw material wheat flour is heated. As the raw material wheat flour, any wheat flours that are conventionally used in coating materials to be attached to solid ingredients when producing fried coated food can be used without limitation, and examples include strong wheat flour, semi-strong wheat flour, medium wheat flour, soft wheat flour, durum wheat flour, and the like, as well as semolina flour, one of which may be used alone or two or more of which may be used in combination. The raw material wheat flour used in the present invention typically has not been subjected to treatment such as heating.

The method for producing a modified wheat flour of the present invention is characterized in that two different heat treatments are performed on the raw material wheat flour by subjecting the raw material wheat flour to first heating step and a second heating step, which will be described later. The modified wheat flour obtained using this method has a superior effect of improving the adhesion of a coating of fried coated food and the texture of the coating, when compared to conventional modified wheat flours obtained through one heat treatment.

The method for producing a modified wheat flour of the present invention includes the first heating step of heating the raw material wheat flour under hermetically sealed conditions so that the temperature of the raw material wheat flour exceeds 100°C. In general, when wheat flour is heated, moisture contained therein vaporizes into steam, but when wheat flour is heated under hermetically sealed conditions, the steam generated from the wheat flour increases the air pressure in the hermetically sealed space, and therefore, the steam condenses on the surface of the wheat flour and returns into the wheat flour as moisture. In the first heating step, the raw material wheat flour is heated at a relatively high temperature while the evaporation of moisture from the raw material wheat flour is suppressed in the above-described manner.

The hermetically sealed conditions are not limited to conditions that can completely prevent air from passing into and out of a space (a hermetically sealed space) in which the raw material wheat flour to be heated is contained, and any conditions that can prevent the passage of air to some extent may be adopted. Typically, the "heating under hermetically sealed conditions" described above can be achieved by heating the raw material wheat flour to be heated in a state in which the raw material wheat flour is contained in a container having a certain degree of airtightness.

In addition, in the first heating step, as long as the predetermined advantageous effect of the present invention can be obtained, an additional treatment may be performed simultaneously with the heating of the raw material wheat flour, and examples of the additional treatment include pressurization using a pressurizing means other than air pressure, stirring, and the like.

Preferred heating conditions for the raw material wheat flour in the first heating step include the following conditions.
- Heating temperature (the temperature of the raw material wheat flour): preferably 105°C to 140°C, more preferably 110°C to 130°C
- Heating time (the amount of time for which the heating temperature is maintained): preferably 3 to 90 minutes, more preferably 5 to 60 minutes, even more preferably 8 to 45 minutes
- Air pressure in the space (hermetically sealed space) in which the raw material wheat flour is contained: preferably 1.1 to 10 bar, more preferably 2 to 8 bar

In the present invention, the time for which the heating temperature is within the preferred range described above is typically a single continuous period of time, but encompasses a form in which it includes multiple periods of time that are discontinuous with each other, in which case it is preferable that the sum of the multiple periods of time falls within the preferred range described above. This holds true for the second heating step, which will be described later.

In the first heating step, from the viewpoint of ensuring that the raw material wheat flour is heated more efficiently, the ratio ("ratio of volume occupied by wheat flour") of the volume of the raw material wheat flour to be heated contained in the hermetically sealed space to the volume of the hermetically sealed space is preferably 10 to 60 vol%, and more preferably 15 to 50 vol%. Preferably, the ratio of volume occupied by wheat flour in the second heating step, which will be described later, is also within the above-described range.

There is no particular limitation on a heating apparatus that is used to perform the first heating step, provided that the heating apparatus can satisfy the above-described heating conditions. For example, a heating apparatus that heats an object to be heated using heated steam or a heated air flow may be used. However, from the viewpoint of ensuring that the predetermined advantageous effect of the present invention is obtained more reliably, it is preferable to use a heating apparatus that does not excessively increase or decrease moisture in the raw material wheat flour. In view of this, a heating apparatus that does not use heated steam or a heated air flow, for example, a heating apparatus that performs heating in a high-temperature atmosphere with little convection or a heating apparatus that uses a heating medium such as a metal is preferred. Specific examples include an oven, a pot, a stirring apparatus or an extrusion apparatus equipped with a heating means, and the like.

An example of a heating apparatus that can be suitably used to perform the first heating step is a heat-treating and stirring apparatus disclosed in Japanese Patent No. 4112910. This heat-treating and stirring apparatus includes a cylindrical container for containing an object to be treated, a hollow rotating shaft that is provided inside the cylindrical container, a hollow pipe screw that is formed in communication with the rotating shaft, and a steam supply source that supplies steam into the rotating shaft and the pipe screw, and the heat-treating and stirring apparatus is configured to be able to perform a heat treatment by supplying steam into the rotating shaft and the pipe screw to transfer heat to the rotating shaft and the pipe screw and allowing the transferred heat to propagate to the object to be treated.

The method for producing a modified wheat flour of the present invention may include a moisture conditioning step of adjusting the moisture content of the raw material wheat flour to preferably 12 to 22 mass%, or more preferably 14 to 18 mass%, prior to the first heating step. The "moisture content" here refers to a value that is obtained using an absolute dry method. The moisture conditioning step prior to the first heating step makes it possible to more effectively heat the raw material wheat flour while suppressing the evaporation of moisture from the raw material wheat flour during the first heating step, and thus, the predetermined advantageous effect of the present invention can be obtained more reliably. Since wheat flour usually has a moisture content of about 10 to 14 mass%, the moisture conditioning step typically includes adding moisture to the raw material wheat flour. Water or steam can be used as the moisture that is added to the raw material wheat flour, and saturated steam is favorably used as the steam.

The method for producing a modified wheat flour of the present invention includes the second heating step of heating the raw material wheat flour from the first heating step under atmospheric pressure conditions so that the temperature of the raw material wheat flour is in a range of 90°C to 120°C. Since the second heating step is performed in an open system after canceling the hermetically sealed conditions of the first heating step, the moisture in the raw material wheat flour vaporizes (evaporates).

The heat treatment of the raw material wheat flour that is performed in the second heating step is typically a dry heat treatment. The dry heat treatment is a process of heating an object to be heated (the raw material wheat flour) without adding moisture, and is a heat treatment performed while actively evaporating the moisture in the object that is being treated.

Preferred heating conditions for the raw material wheat flour in the second heating step include the following conditions.
- Heating temperature (the temperature of the raw material wheat flour): preferably 92°C to 115°C, more preferably 94°C to 110°C
- Heating time (the amount of time for which the heating temperature is maintained): preferably 10 to 180 minutes, more preferably 20 to 120 minutes, even more preferably 30 to 90 minutes

There is no particular limitation on a heating apparatus that is used to perform the second heating step, and any heating apparatus that can satisfy the above-described heating conditions may be used. The heating apparatus used in the first heating step and the heating apparatus used in the second heating step may be the same or different from each other. In the former case, after the first heating step is performed with the space containing the object to be heated (the raw material wheat flour) of the heating apparatus hermetically sealed, the space is opened, thereby satisfying the atmospheric pressure conditions, before the second heating step can be performed.

In the method for producing a modified wheat flour of the present invention, the first heating step and the second heating step may be performed successively, or the second heating step may be performed when a predetermined period of time has elapsed after completion of the first heating step. A specific example of the former case is a mode in which, after the first heating step, when the temperature of the raw material wheat flour reaches 90°C to 120°C, the hermetically sealed space in which the raw material wheat flour is contained is opened, thereby satisfying the atmospheric pressure conditions, and then, the second heating step is performed. In the latter case, after the first heating step and before the second heating step, the temperature of the raw material wheat flour may be allowed to decrease to less than 90°C (less than the target temperature of the raw material wheat flour in the second heating step), but from the viewpoint of ensuring that the predetermined advantageous effect of the present invention is more reliably obtained, it is preferable to maintain the temperature of the raw material wheat flour at 80°C or higher after the first heating step.

The method for producing a modified wheat flour of the present invention may include a step of cooling the raw material wheat flour from the second heating step, or in other words, the modified wheat flour. There is no particular limitation on the method for cooling the wheat flour in the cooling step, and examples include natural cooling, draft cooling, forced cooling in a refrigerator or the like, and the like.

In addition, the method for producing a modified wheat flour of the present invention may include a step of milling the raw material wheat flour (modified wheat flour) from the second heating step. There is no particular limitation on the method for milling the wheat flour in the milling step, and examples include roll milling, pin mill milling, impact milling, and the like.

Either the cooling step or the milling step described above may be performed first, or these steps may be performed simultaneously.

From the viewpoint of improving the adhesion of a coating to a solid ingredient in fried coated food and the texture of the coating, the average particle size of the modified wheat flour is preferably 300 µm or less, and more preferably 150 µm or less. From the same viewpoint, the lower limit of the average particle size of the modified wheat flour is preferably 40 µm or greater, and more preferably 60 µm or greater. The term "average particle size" here refers to a volume-based average particle size as measured using a laser diffraction scattering method (cumulative volume particle size D50 at 50% cumulative volume obtained by using a dry method). A commercially available laser diffraction particle size distribution measurement apparatus, for example, Microtrac MT 3000 II (available from Nikkiso Co., Ltd.) can be used as an apparatus for measuring the average particle size. The average particle size of the modified wheat flour can be adjusted in the milling step described above, for example.

The modified wheat flour (hereinafter also referred to as "specific modified wheat flour") produced using the production method of the present invention described above is also useful for a coating material for fried coated food. The specific modified wheat flour can be used to produce various types of fried coated food, and examples thereof include karaage (Japanese-style deep-fried food), tatsuta-age (a variation of karaage), tempura, kakiage (mixed vegetable and/or seafood tempura), agedama (bits of deep-fried tempura batter), fried food (deep-fried food), fritters, and corn dogs. Specific examples of the fried food include pork cutlets, croquettes, fried shrimp/prawn, fried chicken, French fries, and the like.

The present invention encompasses a coating material for fried coated food, the coating material containing the modified wheat flour described above. The coating material for fried coated food of the present invention will be described mainly focusing on the differences from the method for producing a modified wheat flour of the present invention described above. For details of the coating material for fried coated food of the present invention that are not specifically described below, reference can be made to the description of the method for producing a modified wheat flour as appropriate.

There is no particular limitation on the amount of the specific modified wheat flour contained in the coating material for fried coated food of the present invention, and the amount can be adjusted as appropriate according to the type of fried coated food to be produced, for example. However, from the viewpoint of ensuring that the effect of the modified wheat flour is obtained more reliably, the amount of the specific modified wheat flour is preferably 10 mass% or greater, and more preferably 20 mass% or greater, with respect to the total mass of the coating material. Although the amount of the specific modified wheat flour contained in the coating material for fried coated food of the present invention may be 100 mass%, the amount is preferably 98 mass% or less, and more preferably 95 mass% or less, for example.

The coating material for fried coated food of the present invention typically contains at least one additional cereal flour component other than the specific modified wheat flour. As used herein, the term "cereal flour component" refers to a substance that is derived from grain and is in the form of a powder at normal temperature and pressure, and the concept thereof encompasses cereal flour and starch. The term "starch" here refers to, unless otherwise stated, "pure starch" isolated from a plant such as wheat, and is distinguished from the starch inherently contained in cereal flour.

Examples of the cereal flour include unmodified ordinary wheat flour (strong wheat flour, semi-strong wheat flour, medium wheat flour, soft wheat flour, durum wheat flours, and whole wheat flour), barley flour, rye flour, rice flour, corn flour, sorghum flour, and bean flour. The specific modified wheat flour is a type of cereal flour.

Examples of the starch include starches (raw starches) such as potato starch, tapioca starch, corn starch, waxy corn starch, and wheat starch, and modified starches obtained by subjecting raw starches to one or more of processes such as gelatinization, etherification, esterification, acetylation, crosslinking, and oxidization.

There is no particular limitation on the total amount of the cereal flour components including the specific modified wheat flour contained in the coating material for fried coated food of the present invention, and the amount can be adjusted as appropriate according to the type of fried coated food to be produced using the coating material. In general, the total amount of the cereal flour components is preferably 60 to 98 mass%, and more preferably 70 to 95 mass%, with respect to the total mass of the coating material.

The coating material for fried coated food of the present invention may optionally further contain additional components other than a cereal flour component. As the additional components, components that usually can be added to this type of coating material for fried coated food can be used without limitation. Examples include: whole egg powder and egg white powder; oils and fats; saccharides such as dextrin, starch syrup, and sugar alcohols; salts; seasonings; leavening agents; emulsifiers; thickening agents; enzymes; and the like. Depending on the type fried coated food to be produced, for example, one of these may be used alone, or two or more thereof may be used in combination. The amount of the additional components is preferably within such a range that the total amount of the components contained in the coating material for fried coated food of the present invention excluding the specific modified wheat flour is 90 mass% or less with respect to the total mass of the coating material.

The coating material for fried coated food of the present invention is in the form of a powder at normal temperature and pressure. When using the coating material, it is possible to attach the coating material in the powder form to a solid ingredient, or mix the coating material with a liquid to obtain a coating solution (so-called batter) in the form of a liquid or a paste and then attach the coating solution to the surface of a solid ingredient. That is to say, the coating material for fried coated food of the present invention may be used as a dusting flour or a breader, or may be used as a material for a coating solution. Preferably, the coating material for fried coated food of the present invention is provided as a premix in the form of a powder, which may be used in the powder form by being attached to a solid ingredient as a breader or may be used as a material for a coating solution.

The present invention encompasses a method for producing fried coated food using the specific modified wheat flour described above. The method for producing fried coated food of the present invention will be described mainly focusing on the differences from the method for producing a modified wheat flour, and the coating material for fried coated food, of the present invention described above. For details of the method for producing fried coated food of the present invention that are not specifically described below, reference can be made to the description of the method for producing a modified wheat flour and the coating material for fried coated food described above, as appropriate.

The method for producing fried coated food of the present invention includes a step of attaching a coating material containing a specific modified wheat flour to a solid ingredient and then cooking the solid ingredient. The coating material for fried coated food of the present invention described above can be used as the "coating material containing a specific modified wheat flour".

In the method for producing fried coated food of the present invention, there is no particular limitation on the solid ingredient, and, for example, various types of foodstuffs including livestock meat, such as chicken, pork, beef, sheep meat, and goat meat; seafood, such as squid, shrimps/prawns, fish, and shellfish; vegetables; fake meat, such as soybean meat; and the like can be used. The solid ingredient may optionally be seasoned before the coating material is attached thereto.

In the method for producing fried coated food of the present invention, there is no particular limitation on the method for attaching the coating material to the solid ingredient, and the coating material in the form of powder may be attached to the solid ingredient, or a coating solution in the form of a liquid or a paste in which the coating material is mixed with a liquid may be attached to the surface of the solid ingredient. Although water is commonly used, there is no particular limitation on the type of the liquid that is mixed with the coating material. For example, an aqueous liquid containing oil and/or seasonings, cow milk, stock, broth, or the like may also be used.

In the method for producing fried coated food of the present invention, after a first coating material containing the specific modified wheat flour is attached to a solid ingredient, a second coating material may be attached to the solid ingredient before the solid ingredient is cooked. There is no particular limitation on the composition of the second coating material. The second coating material may have a similar composition to that of the coating material for fried coated food of the present invention described above, and may or may not contain the specific modified wheat flour described above. In addition, the second coating material may be a breader (e.g., bread crumbs, karaage mix, cereal flour, starch flour, or the like), or may be a coating solution (e.g., egg liquid, coating solution for tempura or deep-fried breaded food, coating solution for karaage, or the like).

In the method for producing fried coated food of the present invention, cooking in oil is typically used as the method for cooking the solid ingredient coated with the coating material. However, other cooking methods such as grilling, for example, may also be used.

### Examples

Hereinafter, the present invention will be described in greater detail using examples. However, it is to be noted that the present invention is not limited to the examples given below.

### Examples 1 to 22 and Comparative Examples 1 to 9: Production of Modified Wheat Flour

Soft wheat flour (moisture content: 12 mass%) was used as a raw material wheat flour, and a modified wheat flour was produced by heating the raw material wheat flour. A heating apparatus having a similar configuration to that of the heat-treating and stirring apparatus disclosed in Japanese Patent No. 4112910 was used as an apparatus for heating the raw material wheat flour, and the raw material wheat flour was subjected to one or two different heat treatments. In the cases where the raw material wheat flour was subjected to two different heat treatments (all of the examples and Comparative Examples 8 and 9), after the raw material wheat flour was fed into a space for containing an object to be treated, of the heating apparatus through an inlet port, the raw material wheat flour was heated either in a heating environment "under hermetically sealed conditions" or in a heating environment "under atmospheric pressure conditions" (first heating step), and subsequently, the raw material wheat flour was heated in the heating environment that was not selected in the first heating step (second heating step), to thereby produce a modified wheat flour having an average particle size of 150 µm or less. The first heating step and the second heating step were performed substantially successively, and after the first heating step, the temperature of the raw material wheat flour was maintained at 80°C or higher. The wording "under hermetically sealed conditions" above means that the raw material wheat flour contained in the space (hermetically sealed space) was heated with the inlet port of the heating apparatus closed, and the wording "under atmospheric pressure conditions" above means that the raw material wheat flour contained in the space was heated with the inlet port of the heating apparatus open. In the heat treatment under hermetically sealed conditions, the ratio of volume occupied by wheat flour described above was 65 vol% in all of the examples and comparative examples. Tables 1 to 4 show details of the heating steps. For the cases where the raw material wheat flour was subjected to only one heat treatment (Comparative Examples 1 to 7), details of the heat treatment were shown in the "First heating step" column in Table 1.

### Examples 23 to 27: Production of Modified Wheat Flour

Prior to the first heating step, water was sprayed onto the raw material wheat flour and mixed well to thereby adjust the moisture content of the raw material wheat flour as shown in Table 5 (moisture conditioning step). Otherwise, similar procedures to those of Example 1 were performed, and thus, a modified wheat flour having an average particle size of 150 µm or less was produced. Note that, when coarse particles were found in the modified wheat flour, the modified wheat flour was passed through a sieve with an opening size of 150 µm to remove the coarse particles.

### Examples 28 to 33 and Comparative Examples 10 to 11: Production of Modified Wheat Flour

A modified wheat flour having an average particle size of 150 µm or less was produced in a similar manner to that of Example 1, except that the heating temperature in the second heating step was set as shown in Table 6. Note that, when coarse particles were found in the modified wheat flour, the modified wheat flour was passed through a sieve with an opening size of 150 µm to remove the coarse particles.

### Evaluation Test: Production of Pork Cutlet

Pork cutlets, which are a type of fried coated food, were produced using the modified wheat flours of the examples and the comparative examples. Specifically, a batter was first prepared by mixing components listed in the "Batter (mass%)" column in Tables 1 to 6. Next, the entire surface of a slice of pork loin (200 g per slice, 1 cm thick), which is a solid ingredient, was evenly coated with dusting flour, the solid ingredient was dipped in the batter, the entire surface of the solid ingredient was then coated with bread crumbs, and the solid ingredient was deep-fried in salad oil heated to 170°C for 4 minutes. In this manner, pork cutlets were produced.

As Reference Example 1, pork cutlets were produced in a similar manner to those of the examples, except that the same raw material wheat flour (soft wheat flour) as that used in the production of the modified wheat flours was used instead of a modified wheat flour. As Reference Example 2, pork cutlets were produced in a similar manner to those of the examples, except that an oil/fat-coated starch (trade name: "Millefix D" manufactured by Oji Cornstarch Co., Ltd.) was used instead of a modified wheat flour.

The produced pork cutlets were allowed to cool slightly, stored in a refrigerator for 6 hours, and then stored in an environment at room temperature (ambient temperature: 25°C) for 1 hour. After storage, the pork cutlets were cut into pieces with a kitchen knife, and the adhesion (resistance to coming off the solid ingredients) of the coatings at this time was evaluated. Also, the pork cutlets after storage were eaten, and the texture of the coatings was evaluated. The evaluations were performed by 10 expert panelists based on the following evaluation criteria, and arithmetic means of evaluation scores given by the 10 panelists were calculated. Tables 1 to 6 show the results.

### Evaluation Criteria for Adhesion of Coating

5 points: Very good. The coating did not come off at all even when the deep-fried food was cut with the kitchen knife.
4 points: Good. The coating hardly came off even when the deep-fried food was cut with the kitchen knife.
3 points: When the deep-fried food was cut with the kitchen knife, the coating in a portion corresponding to 10% to 20% of the entire outline of the cut surface came off.
2 points: Poor. When the deep-fried food was cut with the kitchen knife, the coating in a portion corresponding to more than 20% and 50% or less of the entire outline of the cut surface came off.
1 point: Very poor. When the deep-fried food was cut with the kitchen knife, the coating in a portion corresponding to more than 50% of the entire outline of the cut surface came off.

### Evaluation Criteria for Texture of Coating

5 points: Very good. The coating was crispy and had a brittle texture.
4 points: Good. The coating was crispy.
3 points: The coating was somewhat lacking in crispiness.
2 points: Poor. The coating was somewhat soft or somewhat hard, and was lacking in a brittle and crispy texture.
1 point: Very poor. The coating was very soft or very hard, and had no brittle texture.

**Table 1**

| | | Ex. | Com. Ex. | | | | | | | | Ref. Ex. | |
|---|---|---|---|---|---|---|---|---|---|---|---|---|
| | | 1 | 1 | 2 | 3 | 4 | 5 | 6 | 7 | 8 | 1 | 2 |
| First heating step | Heating environment | Hermetically sealed conditions | Hermetically sealed conditions | Hermetically sealed conditions | Hermetically sealed conditions | Atmospheric pressure conditions | Atmospheric pressure conditions | Atmospheric pressure conditions | Atmospheric pressure conditions | Atmospheric pressure conditions | - | - |
| | Air pressure in hermetically sealed space (bar) | 2 | 2 | 2 | 2 | - | - | - | - | - | - | - |
| | Heating temperature (temperature of raw material wheat flour) (°C) | 120 | 120 | 120 | 120 | 105 | 105 | 105 | 105 | 105 | - | - |
| | Heating time (min) | 30 | 10 | 30 | 60 | 10 | 30 | 60 | 120 | 60 | - | - |
| Second heating step | Heating environment | Atmo-spheric pressure conditions | - | - | - | - | - | - | - | Hermetically sealed conditions | - | - |
| | Air pressure in hermetically sealed space (bar) | - | - | - | - | - | - | - | - | 2 | - | - |
| | Heating temperature (temperature of raw material wheat flour) (°C) | 105 | - | - | - | - | - | - | - | 120 | - | - |
| | Heating time (min) | 60 | - | - | - | - | - | - | - | 30 | - | - |
| Batter (mass%) | Modified wheat flour | 30 | 30 | 30 | 30 | 30 | 30 | 30 | 30 | 30 | - | - |
| | Soft wheat flour | - | - | - | - | - | - | - | - | - | 30 | - |
| | Oil/fat-coated starch | - | - | - | - | - | - | - | - | - | - | 30 |
| | Whole egg | 10 | 10 | 10 | 10 | 10 | 10 | 10 | 10 | 10 | 10 | 10 |
| | Water | 60 | 60 | 60 | 60 | 60 | 60 | 60 | 60 | 60 | 60 | 60 |
| | Total | 100 | 100 | 100 | 100 | 100 | 100 | 100 | 100 | 100 | 100 | 100 |
| Evaluation of pork cutlet (on scale of 1 to 5) | Adhesion of coating | 4.2 | 1.6 | 1.7 | 1.9 | 1.5 | 1.6 | 1.6 | 1.7 | 2.4 | 1.5 | 4.5 |
| | Texture of coating | 4.1 | 2.0 | 2.2 | 2.3 | 2.0 | 2.1 | 2.1 | 2.1 | 2.6 | 2.0 | 1.5 |

As shown in Table 1, in Example 1, since the raw material wheat flour was heated under the hermetically sealed conditions and then heated under the atmospheric pressure conditions, the adhesion of the coating and the texture of the coating were superior to those of Comparative Examples 1 to 7, in which such two different heat treatments were not performed. In Comparative Example 8, although the raw material wheat flour was subjected to two different heat treatments, the order of the heat treatments was the reverse of that in Example 1, which resulted in lower evaluation results compared to Example 1.

**Table 2**

| | | Com. Ex. | Ex. | | | | | |
|---|---|---|---|---|---|---|---|---|
| | | 9 | 2 | 3 | 4 | 5 | 6 | 7 |
| First heating step | Heating environment | Hermetically sealed conditions | Hermetically sealed conditions | Hermetically sealed conditions | Hermetically sealed conditions | Hermetically sealed conditions | Hermetically sealed conditions | Hermetically sealed conditions |
| | Air pressure in hermetically sealed space (bar) | 2 | 2 | 2 | 2 | 2 | 2 | 2 |
| | Heating temperature (temperature of raw material wheat flour) (°C) | 100 | 102 | 105 | 110 | 130 | 140 | 150 |
| | Heating time (min) | 30 | 30 | 30 | 30 | 30 | 30 | 30 |
| Second heating step | Heating environment | Atmospheric pressure conditions | Atmospheric pressure conditions | Atmospheric pressure conditions | Atmospheric pressure conditions | Atmospheric pressure conditions | Atmospheric pressure conditions | Atmospheric pressure conditions |
| | Heating temperature (temperature of raw material wheat flour) (°C) | 105 | 105 | 105 | 105 | 105 | 105 | 105 |
| | Heating time (min) | 60 | 60 | 60 | 60 | 60 | 60 | 60 |
| Batter (mass%) | Modified wheat flour | 30 | 30 | 30 | 30 | 30 | 30 | 30 |
| | Whole egg | 10 | 10 | 10 | 10 | 10 | 10 | 10 |
| | Water | 60 | 60 | 60 | 60 | 60 | 60 | 60 |
| | Total | 100 | 100 | 100 | 100 | 100 | 100 | 100 |
| Evaluation of pork cutlet (on scale of 1 to 5) | Adhesion of coating | 2.2 | 3.5 | 3.8 | 4.0 | 4.1 | 3.8 | 3.4 |
| | Texture of coating | 2.5 | 3.2 | 3.7 | 4.0 | 4.1 | 3.8 | 3.3 |

As shown in Table 2, in Examples 2 to 7, since the temperature of the raw material wheat flour when being heated during the first heating step, in which the raw material wheat flour was heated under the hermetically sealed conditions, was over 100°C, the adhesion of the coating and the texture of the coating were superior to those of Comparative Example 9, which did not satisfy this temperature range.

**Table 3**

| | | Ex. | | | | | | |
|---|---|---|---|---|---|---|---|---|
| | | 8 | 9 | 10 | 11 | 12 | 13 | 14 |
| First heating step | Heating environment | Hermetically sealed conditions | Hermetically sealed conditions | Hermetically sealed conditions | Hermetically sealed conditions | Hermetically sealed conditions | Hermetically sealed conditions | Hermetically sealed conditions |
| | Air pressure in hermetically sealed space (bar) | 2 | 2 | 2 | 2 | 2 | 2 | 2 |
| | Heating temperature (temperature of raw material wheat flour) (°C) | 120 | 120 | 120 | 120 | 120 | 120 | 120 |
| | Heating time (min) | 1 | 3 | 5 | 45 | 60 | 90 | 120 |
| Second heating step | Heating environment | Atmospheric pressure conditions | Atmospheric pressure conditions | Atmospheric pressure conditions | Atmospheric pressure conditions | Atmospheric pressure conditions | Atmospheric pressure conditions | Atmospheric pressure conditions |
| | Heating temperature (temperature of raw material wheat flour) (°C) | 105 | 105 | 105 | 105 | 105 | 105 | 105 |
| | Heating time (min) | 60 | 60 | 60 | 60 | 60 | 60 | 60 |
| Batter (mass%) | Modified wheat flour | 30 | 30 | 30 | 30 | 30 | 30 | 30 |
| | Whole egg | 10 | 10 | 10 | 10 | 10 | 10 | 10 |
| | Water | 60 | 60 | 60 | 60 | 60 | 60 | 60 |
| | Total | 100 | 100 | 100 | 100 | 100 | 100 | 100 |
| Evaluation of pork cutlet (on scale of 1 to 5) | Adhesion of coating | 3.2 | 3.5 | 3.9 | 4.0 | 3.9 | 3.6 | 3.3 |
| | Texture of coating | 3.0 | 3.4 | 3.8 | 4.1 | 3.9 | 3.5 | 3.2 |

**Table 4**

| | | Ex. | | | | | | | |
|---|---|---|---|---|---|---|---|---|---|
| | | 15 | 16 | 17 | 18 | 19 | 20 | 21 | 22 |
| First heating step | Heating environment | Hermetically sealed conditions | Hermetically sealed conditions | Hermetically sealed conditions | Hermetically sealed conditions | Hermetically sealed conditions | Hermetically sealed conditions | Hermetically sealed conditions | Hermetically sealed conditions |
| | Air pressure in hermetically sealed space (bar) | 2 | 2 | 2 | 2 | 2 | 2 | 2 | 2 |
| | Heating temperature (temperature of raw material wheat flour) (°C) | 120 | 120 | 120 | 120 | 120 | 120 | 120 | 120 |
| | Heating time (min) | 30 | 30 | 30 | 30 | 30 | 30 | 30 | 30 |
| Second heating step | Heating environment | Atmospheric pressure conditions | Atmospheric pressure conditions | Atmospheric pressure conditions | Atmospheric pressure conditions | Atmospheric pressure conditions | Atmospheric pressure conditions | Atmospheric pressure conditions | Atmospheric pressure conditions |
| | Heating temperature (temperature of raw material wheat flour) (°C) | 105 | 105 | 105 | 105 | 105 | 105 | 105 | 105 |
| | Heating time (min) | 5 | 10 | 20 | 30 | 90 | 120 | 180 | 240 |
| Batter (mass%) | Modified wheat flour | 30 | 30 | 30 | 30 | 30 | 30 | 30 | 30 |
| | Whole egg | 10 | 10 | 10 | 10 | 10 | 10 | 10 | 10 |
| | Water | 60 | 60 | 60 | 60 | 60 | 60 | 60 | 60 |
| | Total | 100 | 100 | 100 | 100 | 100 | 100 | 100 | 100 |
| Evaluation of pork cutlet (on scale of 1 to 5) | Adhesion of coating | 3.4 | 3.6 | 3.8 | 4.0 | 4.2 | 4.0 | 3.8 | 3.4 |
| | Texture of coating | 3.1 | 3.5 | 3.7 | 4.0 | 4.2 | 3.9 | 3.6 | 3.3 |

**Table 5**

| | | Ex. | | | | | |
|---|---|---|---|---|---|---|---|
| | | 1 | 23 | 24 | 25 | 26 | 27 |
| Moisture conditioning step | | Not performed | Performed | Performed | Performed | Performed | Performed |
| Moisture content of raw material wheat flour (mass%) | | 12 | 14 | 16 | 18 | 20 | 22 |
| First heating step | Heating environment | Hermetically sealed conditions | Hermetically sealed conditions | Hermetically sealed conditions | Hermetically sealed conditions | Hermetically sealed conditions | Hermetically sealed conditions |
| | Air pressure in hermetically sealed space (bar) | 2 | 2 | 2 | 2 | 2 | 2 |
| | Heating temperature (temperature of raw material wheat flour) (°C) | 120 | 120 | 120 | 120 | 120 | 120 |
| | Heating time (min) | 30 | 30 | 30 | 30 | 30 | 30 |
| Second heating step | Heating environment | Atmospheric pressure conditions | Atmospheric pressure conditions | Atmospheric pressure conditions | Atmospheric pressure conditions | Atmospheric pressure conditions | Atmospheric pressure conditions |
| | Heating temperature (temperature of raw material wheat flour) (°C) | 105 | 105 | 105 | 105 | 105 | 105 |
| | Heating time (min) | 60 | 60 | 60 | 60 | 60 | 60 |
| Batter (mass%) | Modified wheat flour | 30 | 30 | 30 | 30 | 30 | 30 |
| | Whole egg | 10 | 10 | 10 | 10 | 10 | 10 |
| | Water | 60 | 60 | 60 | 60 | 60 | 60 |
| | Total | 100 | 100 | 100 | 100 | 100 | 100 |
| Evaluation of pork cutlet (on scale of 1 to 5) | Adhesion of coating | 4.2 | 4.4 | 4.5 | 4.5 | 4.4 | 4.2 |
| | Texture of coating | 4.1 | 4.4 | 4.5 | 4.4 | 4.3 | 4.2 |

**Table 6**

| | | Com. Ex. | Ex. | | | | | | Com. Ex. |
|---|---|---|---|---|---|---|---|---|---|
| | | 10 | 28 | 29 | 30 | 31 | 32 | 33 | 11 |
| First heating step | Heating environment | Hermetical-ly sealed conditions | Hermetical-ly sealed conditions | Hermetical-ly sealed conditions | Hermetical-ly sealed conditions | Hermetical-ly sealed conditions | Hermetical-ly sealed conditions | Hermetical-ly sealed conditions | Hermetical-ly sealed conditions |
| | Air pressure in hermetically sealed space (bar) | 2 | 2 | 2 | 2 | 2 | 2 | 2 | 2 |
| | Heating temperature (temperature of raw material wheat flour) (°C) | 120 | 120 | 120 | 120 | 120 | 120 | 120 | 120 |
| | Heating time (min) | 30 | 30 | 30 | 30 | 30 | 30 | 30 | 30 |
| Second heating step | Heating environment | Atmospheric pressure conditions | Atmospheric pressure conditions | Atmospheric pressure conditions | Atmospheric pressure conditions | Atmospheric pressure conditions | Atmospheric pressure conditions | Atmospheric pressure conditions | Atmospheric pressure conditions |
| | Heating temperature (temperature of raw material wheat flour) (°C) | 85 | 90 | 92 | 94 | 110 | 115 | 120 | 125 |
| | Heating time (min) | 60 | 60 | 60 | 60 | 60 | 60 | 60 | 60 |
| Batter (mass%) | Modified wheat flour | 30 | 30 | 30 | 30 | 30 | 30 | 30 | 30 |
| | Whole egg | 10 | 10 | 10 | 10 | 10 | 10 | 10 | 10 |
| | Water | 60 | 60 | 60 | 60 | 60 | 60 | 60 | 60 |
| | Total | 100 | 100 | 100 | 100 | 100 | 100 | 100 | 100 |
| Evaluation of pork cutlet (on scale of 1 to 5) | Adhesion of coating | 2.7 | 3.6 | 3.8 | 4.0 | 4.0 | 3.8 | 3.6 | 2.8 |
| | Texture of coating | 2.9 | 3.7 | 3.9 | 4.0 | 4.1 | 3.9 | 3.6 | 2.7 |

As shown in Table 6, in Examples 28 to 33, since the temperature of the raw material wheat flour when being heated during the second heating step was 90°C to 120°C, the adhesion of the coating and the texture of the coating were superior to those of Comparative Examples 10 and 11, which did not satisfy this temperature range.

### Industrial Applicability

According to the present invention, provided are a method for producing a modified wheat flour with which fried coated food in which a coating has excellent adhesion to a solid ingredient and also has an excellent texture can be produced, a coating material for fried coated food, and a method for producing fried coated food.

## Claims

1. A method for producing a modified wheat flour, comprising:
a first heating step of heating a raw material wheat flour under hermetically sealed conditions so that a temperature of the raw material wheat flour exceeds 100°C; and
a second heating step of heating the raw material wheat flour from the first heating step under atmospheric pressure conditions so that the temperature of the raw material wheat flour is in a range of 90°C to 120°C.

2. The method for producing a modified wheat flour according to claim 1, comprising:
a moisture conditioning step of adjusting a moisture content of the raw material wheat flour to 12 to 22 mass% prior to the first heating step.

3. A coating material for fried coated food, comprising a modified wheat flour produced using the production method according to claim 1 or 2.

4. A method for producing fried coated food, comprising:
a step of attaching a coating material containing a modified wheat flour produced using the production method according to claim 1 or 2 to a solid ingredient and then cooking the solid ingredient.
